# EUROPEAN PATENT APPLICATION

(11) **EP 3 984 667 A1**
(43) Date of publication of application: **20.04.2022**
(21) Application number: 21191404.9
(22) Date of filing: 13.08.2021
(51) Int. Cl.: B22F 7/08, B33Y 80/00, C22C 1/04, C22C 33/02, B22F 10/25, G21B 1/00

(54) **STEEL TO TUNGSTEN FUNCTIONALLY GRADED MATERIAL SYSTEMS**

(30) Priority: 14.10.2020 US 202063091410 P
(71) Applicant: Questek Innovations LLC, Evanston, IL 60201 (US)
(72) Inventor: Thomas, Marie, Evanston, 60201 (US); Frankel, Dana, Evanston, 60201 (US)
(74) Representative: Barker Brettell LLP

(57) **Abstract**

Functionally graded materials comprise a graded volume extending between a tungsten-based structure and a steel-based structure, where the graded volume includes a plurality of additively manufactured layers. At least one of the plurality of additively manufactured layers comprise a ternary element selected from vanadium and chromium. Some of the additively manufactured layers may further comprise aluminum.

## Description

### CROSS-REFERENCE TO RELATED APPLICATION(S)

This application claims priority to U.S. Provisional Patent Application No. 63/091,410, filed on October 14, 2020, the entire contents of which are incorporated herein by reference.

### GOVERNMENT INTEREST

This invention was made with government support under DE-SC0020032 to QuesTek Innovations LLC awarded by the U.S. Department of Energy. The government has certain rights in the invention.

### TECHNICAL FIELD

The present disclosure relates to materials, methods and techniques for joining dissimilar metals. More particularly, exemplary materials, methods and techniques relate to functionally graded material systems that can join dissimilar metals.

### INTRODUCTION

Dissimilar joints between materials that have excellent high temperature performance and materials that provide heat conduction for active cooling systems are challenging to produce and can lead to many performance deficits. For plasma facing components (PFCs) in fusion reactors, plasma-facing refractory material such as tungsten (W) must be joined to a heat sink in order to dissipate the extremely high thermal loads generated by the plasma. The stresses induced by the large difference in coefficient of thermal expansion (CTE) between the shielding material (tungsten (W)) and heat sink (Reduced Activation Ferritic Martensitic (RAFM) steel or copper (Cu)) during thermal cycling can cause cracking or even failure of the component.

### SUMMARY

Materials, methods and techniques disclosed and contemplated herein relate to functionally graded materials. In one aspect, a functionally graded material includes a graded volume extending between a tungsten structure and a steel structure. The graded volume includes a plurality of additively manufactured layers. At least one of the plurality of additively manufactured layers includes a ternary element selected from vanadium and chromium.

In another aspect, a method for making a functionally graded material adjacent a first endpoint material and a second endpoint material is disclosed. The example method may comprise successively generating a first set of layers, wherein each successive layer in the first set of layers comprises the first endpoint material in decreasing amounts and a ternary element in increasing amounts; generating a layer comprising no less than 80 wt% of the ternary element and less than 10 wt% of the first endpoint material and/or the second endpoint material; and successively generating a second set of layers, wherein each successive layer in the second set of layers comprises the second endpoint material in increasing amounts and the ternary element in decreasing amounts, wherein either the first endpoint material or the second endpoint material comprises tungsten (W).

In another aspect, a manufactured article is disclosed. An example manufactured article may comprise a tungsten portion, a steel portion, and a graded volume extending between the tungsten portion and the steel portion. The graded volume comprises a plurality of additively manufactured layers, where at least one of the plurality of additively manufactured layers includes a ternary element selected from vanadium and chromium.

In another aspect, a plasma facing component is disclosed. The plasma facing component may comprise a plasma-facing reactor portion comprising tungsten; a heat sinking portion surrounding at least a portion of the plasma-facing reactor portion; and a graded volume extending between the plasma-facing reactor portion and the heat sinking portion. The graded volume may comprise a plurality of additively manufactured layers. At least one of the plurality of additively manufactured layers may comprise a ternary element selected from vanadium and chromium.

There is no specific requirement that a material, technique or method relating to functionally graded materials include all of the details characterized herein, in order to obtain some benefit according to the present disclosure. Thus, the specific examples characterized herein are meant to be exemplary applications of the techniques described, and alternatives are possible.

### BRIEF DESCRIPTION OF THE DRAWINGS

FIG. 1 is a side schematic view of an exemplary printed article.
FIG. 2 is a side schematic view of an exemplary functionally graded material.
FIG. 3A is a side schematic view of an embodiment of an example functionally graded material. FIG. 3B is a side schematic view of another embodiment of an example functionally graded material. FIG. 3C is a side schematic view of another embodiment of an example functionally graded material.
FIG. 4 shows a gradient of Fe-9Cr to W at 1100 K (827°C).
FIG. 5A and FIG. 5B show pseudobinary equilibrium isotherms between two different oxide dispersion strength reduced activation ferritic martensitic steels and tungsten.
FIG. 6A and FIG. 6B show ternary diagrams for chromium (Cr), tungsten (W), and iron (Fe) at a temperature of 1300°C and 800°C, respectively.
FIG. 7A and FIG. 7B show ternary diagrams for vanadium (V), tungsten (W), and iron-9Cr (Fe-9Cr) at a temperature of 826°C and 1300°C, respectively.
FIG. 8A and FIG. 8B show ternary diagrams for vanadium (V), aluminum (Al), and RAFM steel (Fe-9Cr-1W-0.1C) at a temperature of 827°C and 500°C, respectively.
FIG. 9A and FIG. 9B are phase diagrams for RAFM steel (Fe-9Cr-1W-0.1C) and vanadium (V) with 0 wt% aluminum and 5 wt% aluminum, respectively.

### DETAILED DESCRIPTION

Materials, methods and techniques disclosed and contemplated herein relate to functionally graded materials. Exemplary functionally graded materials disclosed herein can provide an interface between different materials. For instance, different materials may have different coefficients of thermal expansion. As an example, a functionally graded material may provide an interface between a material designed to be subjected to high temperatures and a material designed to function as a heat sinking material.

As discussed above, having a sharp interface between materials that have different coefficients of thermal expansion may result in cracking or failure of the component. Replacing a sharp interface with a functionally graded material interlayer between the shielding material and an underlying cooling structure can create a more continuous gradient in thermal properties between the dissimilar materials. As a result, thermomechanical stress development can be reduced and produce a more robust joint. Among the techniques capable of preparing functionally graded materials, additive manufacturing (AM) techniques, such as powder-blown directed energy deposition (DED), are flexible and promising options that can fabricate functionally graded materials with complex geometries and controlled microstructures.

Certain aspects of the instant disclosure involve steel as a cooling structure and tungsten as a shielding material. Joining steel to tungsten directly is difficult due to dissimilar properties (melting points, coefficients of thermal expansion, etc.) and the tendency to form brittle intermetallic phases, all of which can lead to poor joint quality. Additive manufacturing can enable fabrication of compositionally graded systems in which the composition is varied between two or more materials (elements or alloys) in a controlled manner in order to optimize the properties and performance of the joint.

In some aspects, the instant disclosure identifies composition systems (Steel-X-Y-W) in which "Steel" may refer to reduced activation ferritic martensitic steel ("RAFM Steel") or oxide dispersion strengthened reduced activation ferritic martensitic steel ("ODS RAFM Steel"), and X and Y are ternary and quaternary additions such that, when added in strategic ratios, can enable a composition pathway between steel and tungsten that avoids formation of brittle intermetallic phases, enhances cooling and processability, and/or avoids costly and hazardous (i.e. high neutron activation) elements. Through thermodynamic calculations and other screening criteria, the following systems have been identified as promising Steel-W gradient systems: Steel-V-Al-W, and Steel-Cr-Al-W.

### I. Exemplary Functionally Graded Materials

Various aspects of exemplary functionally graded materials are discussed below.

### A. Example Schematic Arrangements of Functionally Graded Materials

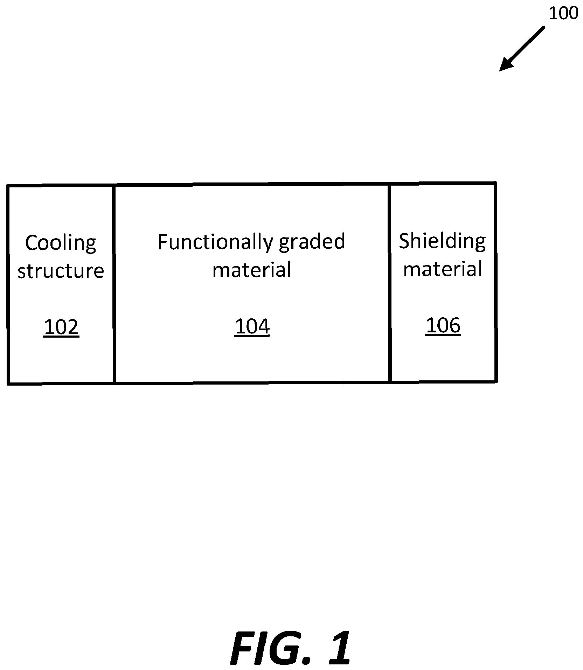

FIG. 1 schematically shows a side sectional view of an exemplary manufactured article 100. In the embodiment shown, one exterior surface is comprised of cooling structure 102 and an opposite exterior surface is comprised of shielding material 106. A series of intermediate layers are disposed between cooling structure 102 and shielding material 106, and those layers are termed the functionally graded material 104. Generally, cooling structure 102 and shielding material 106 have one or more dissimilar physical properties, such as different coefficients of thermal expansion and melting points. In some implementations, "dissimilar" means a particular property differs between the cooling structure 102 and shielding material 106 by a factor of at least 1.5, at least 2, at least 3, at least 4, or at least 5.

Manufactured article 100 can be produced using additive manufacturing techniques, which involve printing a series of material layers. Manufactured article 100 may be printed starting either with cooling structure 102 or shielding material 106. When printing the functionally graded material 104, an amount of the adjacent material (either the cooling structure 102 or shielding material 106) is decreased in each printed layer and one or more elements may be included in each layer. At some point, the amount of one exterior material is no longer included in the printed layer in the functionally graded material 104 and the amount of the other exterior material is increased in each layer until that material comprises the entirety of the printed layer.

### B. Example Design Considerations

One challenge in creating a functional gradient between dissimilar materials is determining a composition pathway that can avoid detrimental phase formation. In certain implementations, a functionally graded material is an interface between a tungsten (W)-based material and either RAFM steel or copper (Cu). A simple linear pathway between steel and tungsten endpoints would stabilize a number of brittle intermetallic phases such as laves phase and mu phase, which would likely lead to a weak joint and cause cracking during fabrication or operation. Certain ternary additions (Steel-X-W, where X is the ternary addition) or quaternary additions (Steel-X-Y-W, where X and Y are ternary and quaternary additions) can thermodynamically destabilize these detrimental phases. Additionally, the large disparity in melting points between the steel and tungsten endpoints can cause difficulty in processing. When identifying ternary or quaternary additions of interest, one aspect of interest is identifying pathways with intermediate melting points to enable processability.

Instantly disclosed functionally graded materials may employ ternary and quaternary systems in which detrimental brittle phases may be avoided between the steel and tungsten endpoints. Other considerations may be relevant to exemplary ternary and quaternary systems, such as melting point, cost, and activation upon exposure to neutron irradiation, which may be a safety consideration for handling of fusion reactor material.

### C. Example Endpoints

As discussed above, exemplary functionally graded materials include an interface between two different materials, alternatively referred to as "endpoints," although they are three dimensional volumes. In some instances, the endpoints may be a shielding material and a cooling structure. In some instances, the non-tungsten (W) based endpoints may serve as structural components of a cooling system that carries a working fluid, such as liquid helium (He) or water.

Example shielding materials in exemplary printed materials typically have low coefficients of thermal expansion. For instance, example shielding materials may have a linear coefficient of thermal expansion, α, of less than 5 at 20 °C (10⁻⁶ K⁻¹) and/or a volumetric coefficient of thermal expansion, αᵥ, of less than 15 at 20 °C (10⁻⁶ K⁻¹). In some instances, example shielding materials can include tungsten and tungsten-based materials.

Example cooling structures typically have higher coefficients of thermal expansion than the shielding materials discussed above. In some instances, example cooling structures can be a reduced activation ferritic martensitic (RAFM) steel. In some instances, example cooling structures can be an oxide dispersion strengthened reduced activation ferritic martensitic (ODS-RAFM) steel. In some instances, example cooling structures can be copper or copper-based.

### D. Example Ternary and Quaternary Elements

Exemplary functionally graded materials may include one or more ternary and/or quaternary elements. Generally, example ternary elements have melting points between the melting point of the shielding material and the melting point of the cooling structure. Of potential elements meeting these criteria, certain elements may be omitted based on current expense (e.g., rhenium (Re), osmium (Os), tantalum (Ta), and zirconium (Zr)) and certain elements may be omitted because they exhibit high levels of neutron activation under fusion energy conditions (titanium (Ti), niobium (Nb), and molybdenum (Mo)). Accordingly, example functionally graded materials may include chromium (Cr) or vanadium (V) as ternary elements.

Ternary equilibrium and pseudoternary equilibrium isotherms were calculated at processing temperatures of interest for additive manufacturing. Both chromium (Cr) and vanadium (V) were found to destabilize the mu and laves phases. In some instances, Cr or V may stabilize a sigma phase which may also be brittle.

In some implementations, formation of sigma phase may be avoided in various ways. For instance, aluminum (Al) may be added as a quaternary element. Alternatively, or in addition to, the additive manufacturing processing parameters may be adjusted, such as adjusting a temperature. Without being bound by a particular theory, it appears that once the single phase BCC vanadium (V)-rich or chromium (Cr)-rich phase is stable, tungsten (W) may be added to the system without additional brittle phases forming because of the continuous solid solution phase field between tungsten and vanadium or chromium.

### E. Exemplary Amounts of Ternary and Quaternary Elements

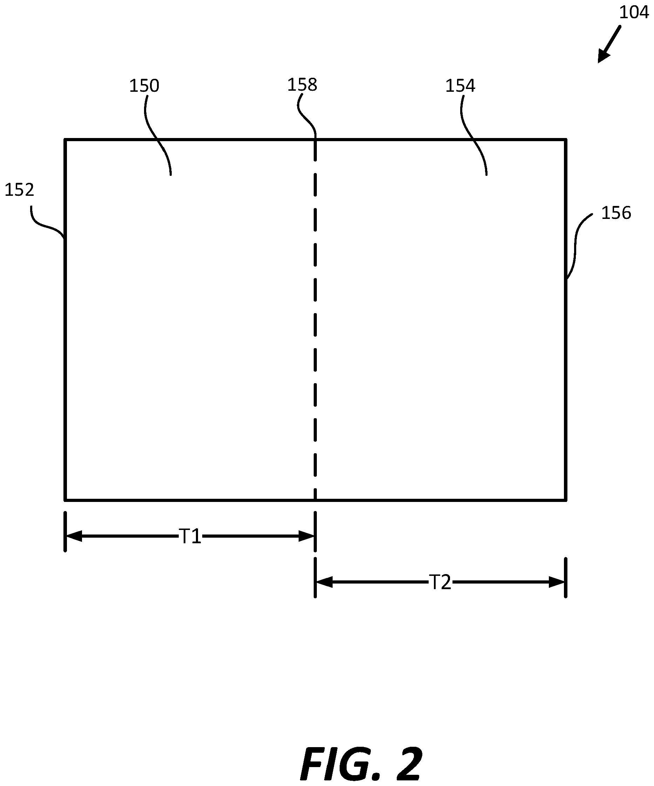

As discussed above, exemplary functionally graded materials may include ternary elements and, in some instances, quaternary elements. Reference is made to FIG. 2 to discuss exemplary amounts of ternary and quaternary elements in example functionally graded materials.

FIG. 2 is a schematic depiction of a side view of an example functionally graded material 104. Functionally graded material 104 is a three-dimensional material with a cooling structure interface 152 on one end and a shielding material interface 156 on the opposite end. A series of additively manufactured layers are disposed between cooling structure interface 152 and shielding material interface 156.

Generally, the layers between interfaces 152 and 156 can be grouped into a portion adjacent the cooling structure interface 150 and a portion adjacent the shielding material interface 154. The portion adjacent the cooling structure interface 150 has a thickness T1 and the portion adjacent the shielding material interface 154 has a thickness T2.

Functionally graded material 104 may be printed starting from cooling structure interface 152 or from shielding material interface 156. Layers closest to cooling structure interface 152 have the highest amounts of cooling structure material (e.g., iron) and each layer closer to shielding material interface 156 includes a lower amount of cooling structure material until a layer is reached, marked layer 158 in FIG. 2, where the layer does not include any cooling structure material. In various implementations, the amount of cooling structure material decreases linearly (which can include multiple different linear decreases) or non-linearly away from cooling structure interface 152.

Layers closest to shielding material interface 156 have the highest amounts of shielding material (e.g., tungsten) and each layer closer to cooling structure interface 152 includes a lower amount of cooling structure material until a layer is reached, marked layer 158 in FIG. 2, where the layer includes little or no shielding material. In various implementations, the amount of cooling structure material decreases linearly (which can include multiple different linear decreases) or non-linearly away from cooling structure interface. In some implementations, there are no layers in either portion 150 or portion 154 that include both shielding material and cooling structure material.

In various implementations, an amount of ternary element in the layers increases from each interface 152 and 156 towards the opposite interface until layer 158 (a "ternary element gradient"). In various instances, ternary element is present in at least one of the plurality of additively manufactured layers, such as layer 158, in an amount that is no less than 70 weight percent (wt.%); no less than 75 wt%; no less than 80 wt%; no less than 85 wt%; no less than 90 wt%; no less than 95 wt%; no less than 98 wt%; no less than 99 wt% or no less than 99.9 wt%. Typically, the shielding material does not include any ternary element.

In some implementations, the cooling structure material may include ternary element. In some implementations, a first layer of a graded volume adjacent the cooling structure may comprise ternary element in a similar or equal amount as that included in the cooling structure. As an example, RAFM steel may comprise about 9 wt% chromium, and a first layer of the graded volume adjacent the cooling structure may comprise about 9 wt% chromium. In various implementations, a first layer of a graded volume adjacent the cooling structure may comprise about 1 wt% to about 10 wt% ternary element. In various implementations, a first layer of the graded volume adjacent the cooling structure may comprise pure iron (Fe) or a different RAFM steel (and 0 wt% ternary element).

In various implementations, the amount of ternary element increases linearly (which can include multiple different linear increases) or non-linearly away from cooling structure interface toward layer 158, where the amount of ternary element is the highest weight percentage. For example, a layer adjacent to the cooling structure interface 152 may include about 9 wt% ternary element or about 10 wt% ternary element, and a layer halfway between the cooling structure interface 152 and layer 158 may include 53 atomic percent ternary element.

In some implementations, portion 150 may include one or more layers where ternary element is present in the same weight percentage or atomic percentage as the cooling structure material. In some implementations, portion 154 may include one or more layers where ternary element is present in the same weight percentage or atomic percentage as the shielding material.

When present, a quaternary element may be present in some or all of the layers in portion 150. When present, a quaternary element may be present in some or all of the layers in portion 154. In various implementations, quaternary element may be present in at least one layer in portion 150 at no more than 20 at%; no more than 15 at%; no more than 13 at%; no more than 10 at%; or no more than 7 at%. In various implementations, quaternary element may be present in at least one layer in portion 154 at no more than 15 at%; no more than 12 at%; no more than 10 at%; no more than 7 at%; or no more than 5 at%.

### F. Exemplary Embodiments ofFunctionally Graded Volumes

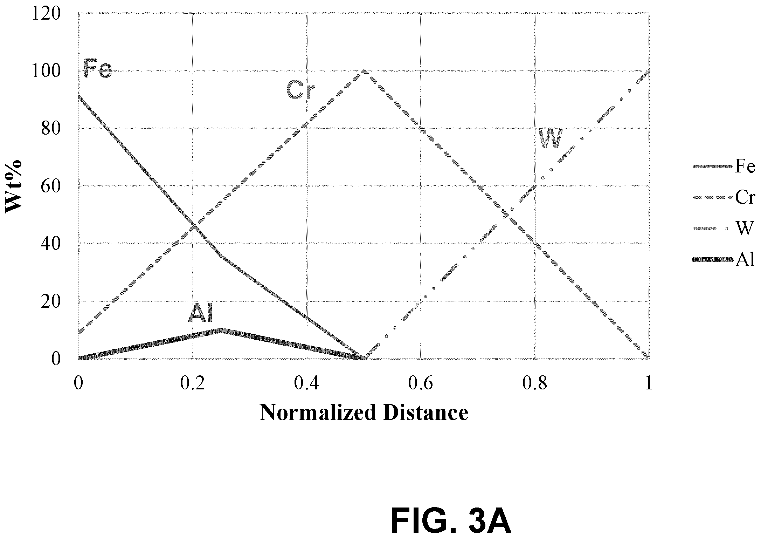

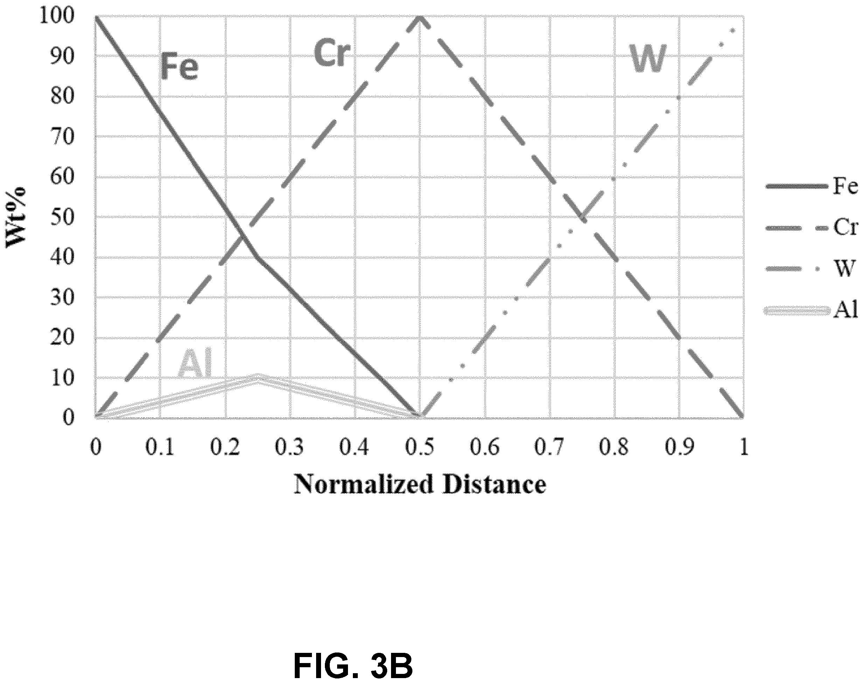

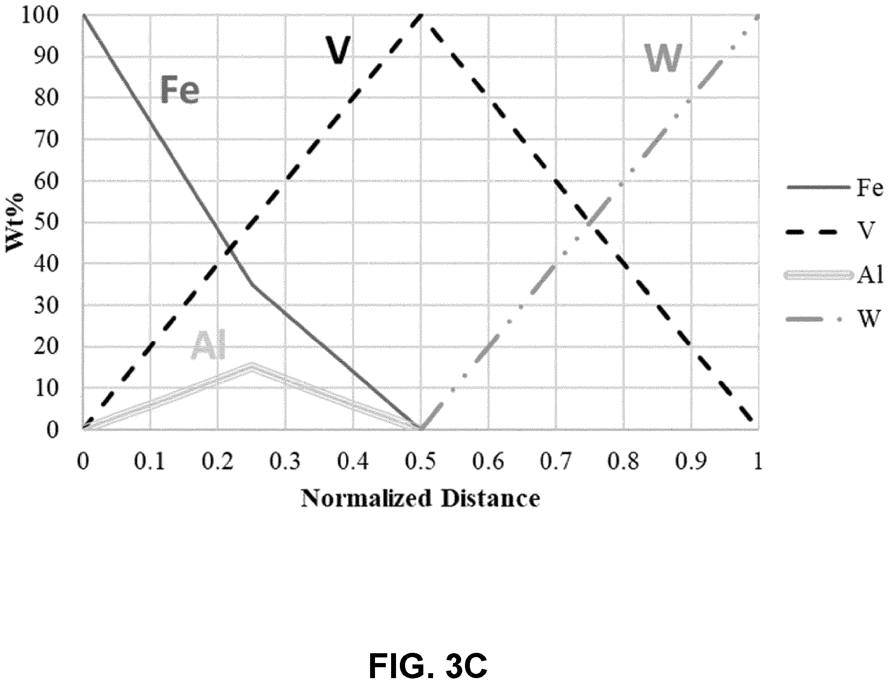

FIG. 3A, FIG. 3B, and FIG. 3C are schematic depictions of embodiments of graded volumes. As shown in FIG. 3A, FIG. 3B, and FIG. 3C, at a normalized distance of 0 the graded volume abuts a steel structure, and at a normalized distance of 1 the graded volume abuts a tungsten-based structure.

In FIG. 3A, broadly, an amount of iron (Fe) in the graded volume decreases in each layer from the steel structure until reaching 0 wt%. As shown, the example embodiment of a graded volume has 0 wt% iron at a normalized distance of 0.5, although alternatives are contemplated. In the embodiment shown in FIG. 3A, an amount of iron (Fe) in each successive layer decreases more rapidly near the steel-graded volume interface than closer to distance 0.5. That is, in the embodiment shown, a rate of decrease in iron (Fe) in each layer from normalized distance 0 to 0.25 is greater than a rate of decrease in iron (Fe) in each layer from 0.25 to 0.5.

In FIG. 3A, the first layer in graded volume adjacent the steel structure also includes about 9 wt% or about 10 wt% chromium (Cr). Each successive layer from normalized distance 0 to 0.5 includes more chromium, peaking at about 100 wt% chromium in a layer that includes no, or substantially no, iron or tungsten. As shown, the peak chromium amount occurs at normalized distance 0.5. In the embodiment shown, each successive layer from normalized distance 0.5 to 1 includes less chromium (Cr), eventually reaching 0 wt% or about 0 wt% chromium at distance 1.

In FIG. 3A, each successive layer from normalized distance 0 to about 0.25 includes more aluminum (Al). In the embodiment shown, a maximum amount of aluminum in one of the layers in the graded volume is about 15 wt%. In various embodiments, aluminum may be present in at least one of the plurality of additively manufactured layers at no more than 15 wt%; no more than 13 wt%; no more than 12 wt%; no more than 10 wt%; or no more than 8 wt%. In the embodiment shown, each successive layer from normalized distance 0.25 to 0.5 includes less aluminum (Al), eventually reaching 0 wt% at normalized distance 0.5.

In FIG. 3A, an amount of tungsten (W) in the graded volume increases in each layer that does not include iron (Fe) until reaching about 100 wt%. As shown, the example embodiment of a graded volume has 0 wt% tungsten at the normalized distance of 0 to about 0.5, and then an amount of tungsten increases until reaching a normalized distance of 1. In the embodiment shown, an amount of tungsten (W) increases at an equal rate in each successive layer from normalized distance 0.5 to 1.

In FIG. 3B, broadly, an amount of iron (Fe) in the graded volume decreases in each layer from the steel structure until reaching 0 wt%. As shown, the example embodiment of a graded volume has 0 wt% iron at a normalized distance of 0.5, although alternatives are contemplated. In the embodiment shown in FIG. 3B, an amount of iron (Fe) in each successive layer decreases more rapidly near the steel-graded volume interface than closer to distance 0.5. That is, in the embodiment shown, a rate of decrease in iron (Fe) in each layer from normalized distance 0 to 0.25 is greater than a rate of decrease in iron (Fe) in each layer from 0.25 to 0.5.

In FIG. 3B, the first layer in graded volume adjacent the steel structure includes 0 wt% or about 0 wt% chromium (Cr). Each successive layer from normalized distance 0 to 0.5 includes more chromium, peaking at about 100 wt% chromium in a layer that includes no, or substantially no, iron or tungsten. As shown, the peak chromium amount occurs at normalized distance 0.5. In the embodiment shown, each successive layer from normalized distance 0.5 to 1 includes less chromium (Cr), eventually reaching 0 wt% or about 0 wt% chromium at distance 1.

In FIG. 3B, each successive layer from normalized distance 0 to about 0.25 includes more aluminum (Al). In the embodiment shown, a maximum amount of aluminum in one of the layers in the graded volume is about 10 wt%. In various embodiments, aluminum may be present in at least one of the plurality of additively manufactured layers at no more than 10 wt%; no more than 9 wt%; or no more than 8 wt%. In the embodiment shown, each successive layer from normalized distance 0.25 to 0.5 includes less aluminum (Al), eventually reaching 0 wt% at normalized distance 0.5.

In FIG. 3B, an amount of tungsten (W) in the graded volume increases in each layer that does not include iron (Fe) until reaching about 100 wt%. As shown, the example embodiment of a graded volume has 0 wt% tungsten at the normalized distance of 0 to about 0.5, and then an amount of tungsten increases until reaching a normalized distance of 1. In the embodiment shown, an amount of tungsten (W) increases at an equal rate in each successive layer from normalized distance 0.5 to 1.

In FIG. 3C, broadly, an amount of iron (Fe) in the graded volume decreases in each layer from the steel structure until reaching 0 wt%. As shown, the example embodiment of a graded volume has 0 wt% iron at a normalized distance of 0.5, although alternatives are contemplated. In the embodiment shown in FIG. 3B, an amount of iron (Fe) in each successive layer decreases more rapidly near the steel-graded volume interface than closer to distance 0.5. That is, in the embodiment shown, a rate of decrease in iron (Fe) in each layer from normalized distance 0 to 0.25 is greater than a rate of decrease in iron (Fe) in each layer from 0.25 to 0.5.

In FIG. 3C, the first layer in graded volume adjacent the steel structure also includes about 0.0 wt% vanadium (V). Each successive layer from normalized distance 0 to 0.5 includes more vanadium (V), peaking at about 100 wt% vanadium (V) in a layer that includes no, or substantially no, iron or tungsten. As shown, the peak vanadium (V) amount occurs at normalized distance 0.5. In the embodiment shown, each successive layer from normalized distance 0.5 to 1 includes less chromium (Cr), eventually reaching 0 wt% or about 0 wt% chromium at distance 1.

In FIG. 3C, each successive layer from normalized distance 0 to about 0.25 includes more aluminum (Al). In the embodiment shown, a maximum amount of aluminum in one of the layers in the graded volume is about 15 wt%. In various embodiments, aluminum may be present in at least one of the plurality of additively manufactured layers at no more than 15 wt%; no more than 13 wt%; no more than 12 wt%; no more than 10 wt%; or no more than 8 wt%. In the embodiment shown, each successive layer from normalized distance 0.25 to 0.5 includes less aluminum (Al), eventually reaching 0 wt% at normalized distance 0.5.

In FIG. 3C, an amount of tungsten (W) in the graded volume increases in each layer that does not include iron (Fe) until reaching about 100 wt%. As shown, the example embodiment of a graded volume has 0 wt% tungsten at the normalized distance of 0 to about 0.5, and then an amount of tungsten increases until reaching a normalized distance of 1. In the embodiment shown, an amount of tungsten (W) increases at an equal rate in each successive layer from normalized distance 0.5 to 1.

### G. Example phase and nanostructure characteristics

Exemplary functionally graded materials can have various phase and nanostructure characteristics.

In some implementations, exemplary functionally graded materials may have little to no laves phase. In various implementations, exemplary functionally graded materials may have less than 20 volume percent; less than 18 volume percent; less than 15 volume percent; less than 10 volume percent; less than 7 volume percent; less than 5 volume percent; less than 4 volume percent; less than 3 volume percent; less than 2 volume percent; less than 1 volume percent; less than 0.5 volume percent; less than 0.1 volume percent; or less than 0.01 volume percent laves phase.

In some implementations, exemplary functionally graded materials may have little to no mu phase. In various implementations, exemplary functionally graded materials may have less than 20 volume percent; less than 18 volume percent; less than 15 volume percent; less than 10 volume percent; less than 7 volume percent; less than 5 volume percent; less than 4 volume percent; less than 3 volume percent; less than 2 volume percent; less than 1 volume percent; less than 0.5 volume percent; less than 0.1 volume percent; or less than 0.01 volume percent mu phase.

In some implementations, exemplary functionally graded materials may have little to no sigma phase, particularly in additively manufactured layers that include iron (Fe). In various implementations, exemplary additively manufactured layers that include iron (Fe) may have less than 20 volume percent; less than 18 volume percent; less than 15 volume percent; less than 10 volume percent; less than 7 volume percent; less than 5 volume percent; less than 4 volume percent; less than 3 volume percent; less than 2 volume percent; less than 1 volume percent; less than 0.5 volume percent; less than 0.1 volume percent; or less than 0.01 volume percent sigma phase.

### II. Example alloy powder systems

Example functionally graded materials disclosed and contemplated herein can be fabricated using various input stock forms relevant to the additive manufacturing system of interest. As an example, a system for providing additive manufacturing powders may include a first metal alloy source configured to provide a steel alloy powder, a second metal source configured to provide a tungsten (W)-based powder, and a third metal source configured to provide either a vanadium (V) powder or a chromium (Cr) powder. In some implementations, the system may include a fourth metal source configured to provide aluminum (Al) powder.

Exemplary systems for providing additive manufacturing powders can be configured to selectively provide one or more of the metal sources mentioned above to achieve desired compositions in functionally graded materials. For instance, multiple powder feeders can selectively provide additive manufacturing powders to a nozzle including a focused laser beam.

### III. Example methods of manufacture

Example functionally graded materials disclosed and contemplated herein can be generated using additive manufacturing systems. Additive manufacturing is a process by which products are built in a layered fashion by selectively fusing metal using a computer-controlled energy source (e.g., laser, electron beam, weld torch, or the like). Additive manufacturing is also defined in ASTM F2792-l2a entitled "Standard Terminology for Additively Manufacturing Technologies."

In general, additive manufacturing techniques provide flexibility in free-form fabrication without geometric constraints, fast material processing time, and innovative joining techniques. In some implementations, directed energy deposition (DED) additive manufacturing may be used to produce exemplary functionally graded materials. A commercially available example of a DED additive manufacturing system is the Optomec Laser Engineered Net Shaping (LENS) MR-7 system (Optomec Inc., Albuquerque, New Mexico). Various atmospheres may be used. In some instances, additive manufacturing may be performed under an argon atmosphere.

Typically, articles are ready for use after additive manufacturing and no post processing operations are necessary. That said, various post-processing operations can be performed after the build process. For example, an as-built article of manufacture may be subjected to basic heat treatment for stress relief.

An exemplary method of making a functionally graded material may begin by printing a first layer onto a shielding material. Printing the first layer may comprise providing a steel alloy powder to an additive manufacturing apparatus from a first powder feeder. Printing the first layer may also comprise providing a ternary powder, such as vanadium (V) or chromium (Cr), to the additive manufacturing apparatus. Printing the first layer may also comprise providing a quaternary powder, such as aluminum (Al), to the additive manufacturing apparatus. In some implementations, the various powders may be provided from a plurality of sources, where each source provides each powder. In some implementations, the various powders may be provided from sources having one or more powders blended.

The exemplary method comprises printing a plurality of layers, where each successive layer comprises less of the adjacent endpoint, which in this instance is the shielding material, and increasing amounts of a ternary element. In some instances, each layer includes increasing amounts of a quaternary element until reaching a quaternary element maximum, at which point an amount of quaternary element in the layers successively decreases. Example amounts of quaternary element are discussed above.

The exemplary method comprises printing layers until no shielding material is present in the printed layer. Thereafter, the exemplary method comprises printing a plurality of layers wherein each successive layer comprises more cooling structure material and less ternary element than the previously printed layer. The exemplary method may comprise printing layers until no ternary element is present in the layer and the layer comprises 99 wt% or more of the cooling structure material.

Alternatively, an exemplary method of making a functionally graded material may begin by printing a first layer onto a cooling structure, rather than the shielding material. In these implementations, the exemplary method proceeds inversely as the exemplary method described above that began printing on the shielding material.

### IV. Example articles of manufacture

Example functionally graded materials disclosed and contemplated herein can be used in a variety of applications. Without limitation, exemplary functionally graded materials may be used in applications involving heat sinking materials. For example, exemplary functionally graded materials may be used in reactors. In some instances, exemplary functionally graded materials may be used in fusion reactors. In some instances, exemplary functionally graded materials may be used with plasma facing component.

### V. Experimental examples

Example experimental products were computationally evaluated and the results are discussed below.

Pseudo-binary equilibrium calculations between RAFM steel and W endpoints showed that brittle laves and mu phases may be stabilized at large phase fractions across all intermediate compositions. The controlled addition of ternary alloying elements was explored to determine if these detrimental phases could be destabilized. Of the elements with intermediate melting points between RAFM steel and W, there are many options considered (Ti, Zr, Cr, V, Ru, Nb, Mo, Ta, Os, and Re). However, many of these elements are either prohibitively expensive (Re, Os, Ta, Zr) or exhibit high levels of neutron activation under fusion energy conditions (Ti, Nb, and Mo). The resulting systems of interest are Cr and V.

Ternary equilibrium and pseudoternary equilibrium isotherms were calculated at processing temperatures of interest for additive manufacturing. Both V and Cr were found to destabilize the mu and laves phases phase but can instead stabilize a sigma phase which is also brittle. The addition of small amounts of Al, or otherwise controlling the processing parameters (such as, e.g., temperature) can avoid the formation of sigma phase as V or Cr is added to steel. Once the single phase bcc V-rich or Cr-rich phase is stable, W can be easily added to the system without additional brittle phases forming due to the continuous solid solution phase field between W and V/Cr.

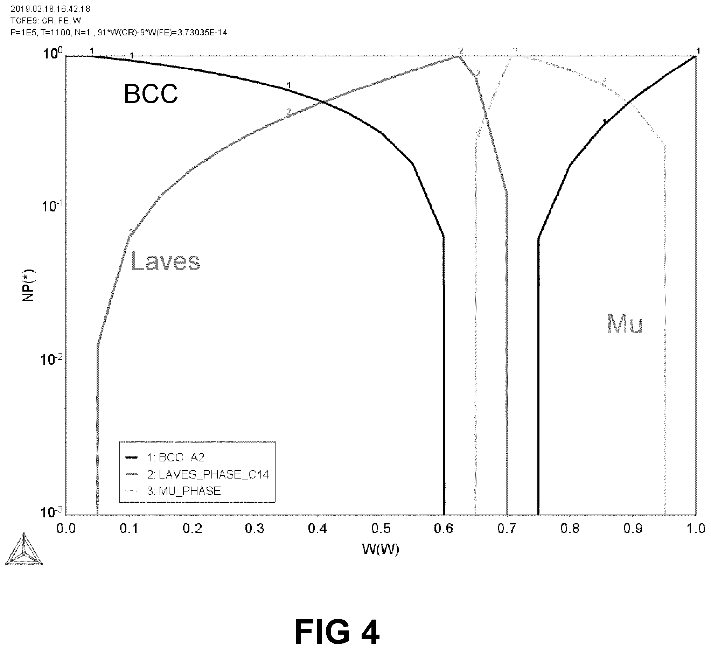

FIG. 4 shows a gradient of Fe-9Cr to W at 1100 K (827°C) produced using Thermo-Calc software. As shown, an amount of tungsten (W) is varied from 0 wt% to 100 wt%, and the BCC, laves, and mu phases are labeled. Generally, it is seen from FIG. 4 that laves and mu phases are stabilized at large fractions.

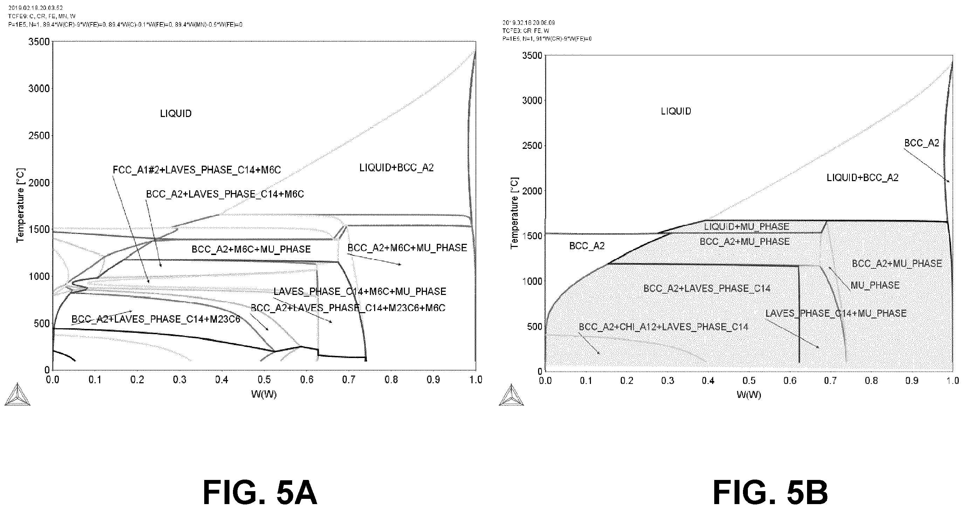

FIG. 5A and FIG. 5B show pseudobinary equilibrium isotherms between two different oxide dispersion strength reduced activation ferritic martensitic steels and tungsten. In FIG. 5A, the steel is a Fe-9Cr-1W-0.5Mn-0.1C steel, and in FIG. 5B, the steel is Fe-9Cr steel. As shown, an amount of tungsten (W) is varied from 0 wt% to 100 wt%, and various phases are labeled. Generally, it is seen from FIG. 5A and FIG. 5B that the laves and mu phases are stabilized at all temperatures that are below the liquidus temperature, particularly for W content above 30%.

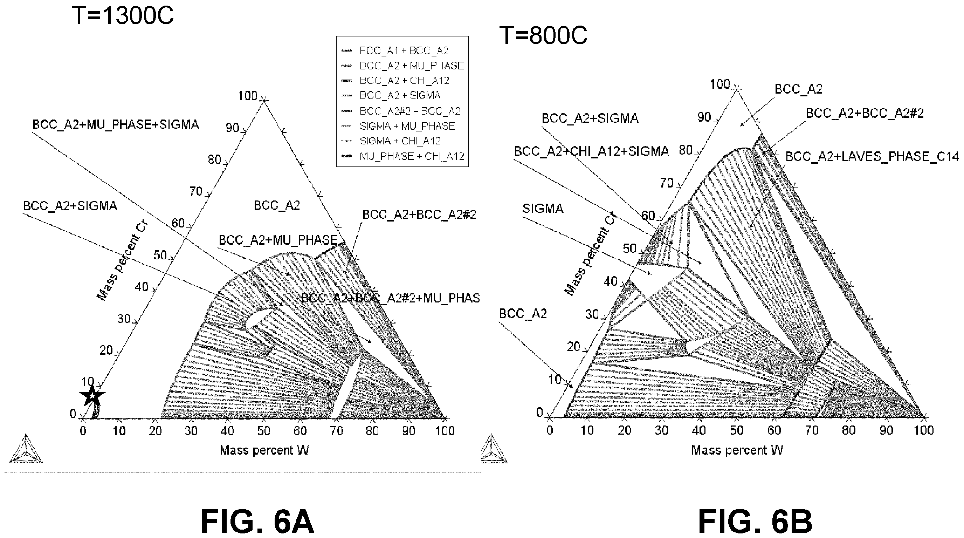

FIG. 6A and FIG. 6B show ternary diagrams for chromium (Cr), tungsten (W), and iron (Fe) at a temperature of 1300°C and 800°C, respectively. Generally, it is seen from FIG. 6A and FIG. 6B that chromium destabilizes laves and mu phases. It is also seen from FIG. 6A and FIG. 6B that chromium stabilizes the sigma phase.

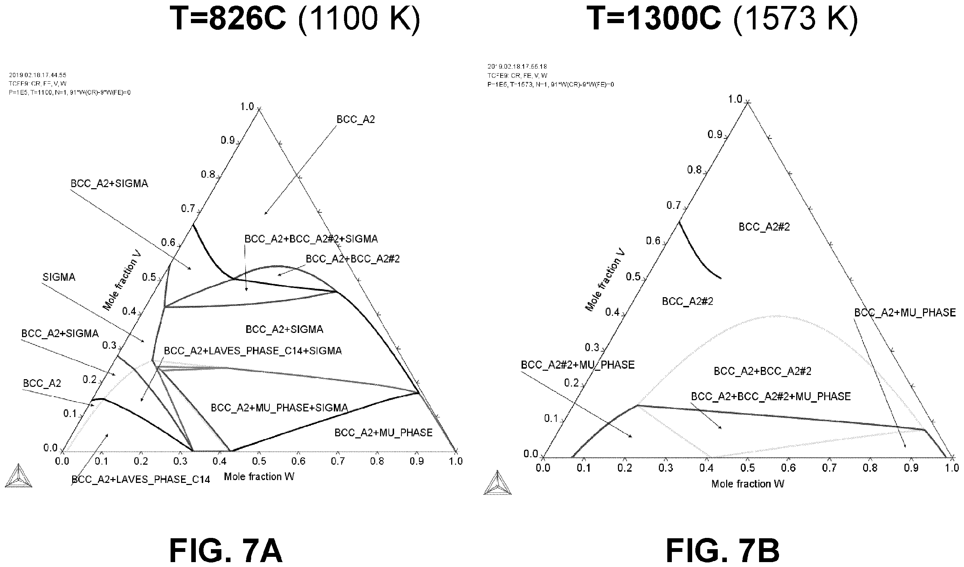

FIG. 7A and FIG. 7B show ternary diagrams for vanadium (V), tungsten (W), and iron-9Cr (Fe-9Cr) at a temperature of 826°C and 1300°C, respectively. Generally, it is seen from FIG. 7A and FIG. 7B that vanadium (V) destabilizes laves and mu phases. It is also seen from FIG. 7A and FIG. 7B that vanadium stabilizes the sigma phase.

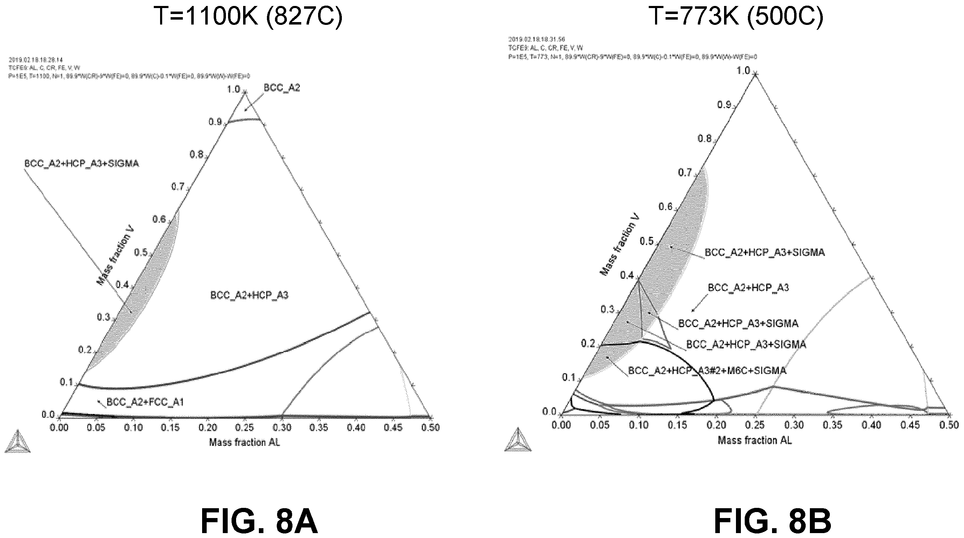

FIG. 8A and FIG. 8B show ternary diagrams for vanadium (V), aluminum (Al), and RAFM steel (Fe-9Cr-1W-0.1C) at a temperature of 827°C and 500°C, respectively. Generally, it is seen from FIG. 8A and FIG. 8B that aluminum (Al) destabilizes the sigma phase in V-RAFM systems.

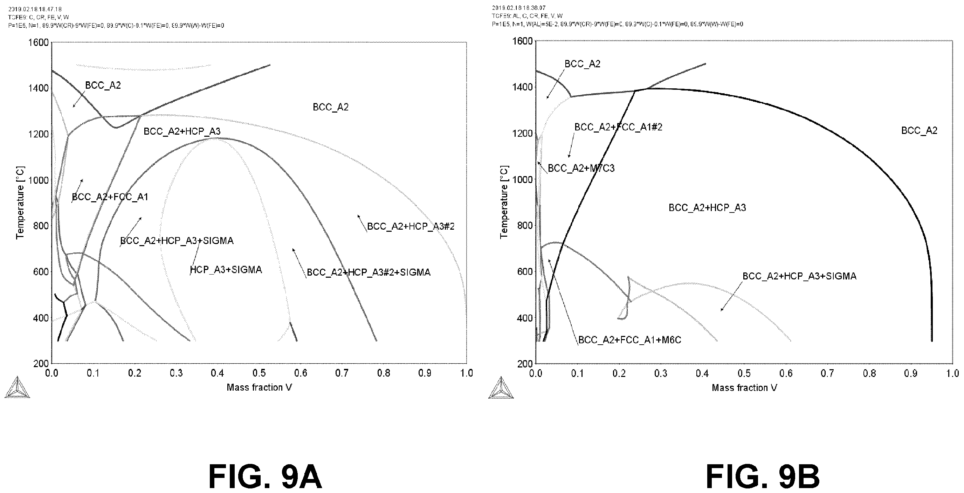

FIG. 9A and FIG. 9B are phase diagrams for RAFM steel (Fe-9Cr-1W-0.1C) and vanadium (V) with 0 wt% aluminum and 5 wt% aluminum, respectively. Generally, it is seen from FIG. 9A and FIG. 9B that 5 wt% aluminum (Al) destabilizes the sigma phase in V-RAFM systems.

For reasons of completeness, various aspects of the disclosure are set out in the following numbered clauses:
Clause 1: A functionally graded material, comprising: a graded volume extending between a tungsten-based structure and a steel-based structure, the graded volume including a plurality of additively manufactured layers, wherein at least one of the plurality of additively manufactured layers comprises a ternary element selected from vanadium and chromium.
Clause 2: The functionally graded material according to clause 1, the graded volume having a ternary element gradient where: a ternary element weight percent in an additively manufactured layer adjacent to the tungsten portion is lower than the ternary element weight percent in an additively manufactured layer halfway between the tungsten portion and the steel portion; and a ternary element weight percent in an additively manufactured layer adjacent to the steel portion is lower than the ternary element weight percent in the additively manufactured layer halfway between the tungsten portion and the steel portion.
Clause 3: The functionally graded material according to clause 1 or clause 2, wherein the graded volume includes less than 20 volume percent laves phase and mu phase.
Clause 4: The functionally graded material according to any one of clauses 1-3, wherein at least one of the plurality of additively manufactured layers that comprises iron (Fe) further comprises aluminum.
Clause 5: The functionally graded material according to any one of clauses 1-4, wherein aluminum is present in at least one of the plurality of additively manufactured layers at no more than 15 weight percent.
Clause 6: The functionally graded material according to any one of clauses 1-5, wherein the additively manufactured layers that include iron (Fe) include less than 20 volume percent sigma phase.
Clause 7: The functionally graded material according to any one of clauses 1-6, wherein the ternary element is present in at least one of the plurality of additively manufactured layers at no less than 80 weight percent.
Clause 8: The functionally graded material according to any one of clauses 1-7, wherein none of the plurality of additively manufactured layers include both steel and tungsten.
Clause 9: The functionally graded material according to any one of clauses 1-8, wherein the steel portion includes oxide dispersion strengthened reduced activation ferritic martensitic (RAFM) steel.
Clause 10: A method for making a functionally graded material adjacent a first endpoint material and a second endpoint material, the method comprising: successively generating a first set of layers, wherein each successive layer in the first set of layers comprises the first endpoint material in decreasing amounts and a ternary element in increasing amounts; generating a layer comprising no less than 80 wt% of the ternary element and less than 10 wt% of the first endpoint material and/or the second endpoint material; and successively generating a second set of layers, wherein each successive layer in the second set of layers comprises the second endpoint material in increasing amounts and the ternary element in decreasing amounts, wherein either the first endpoint material or the second endpoint material comprises tungsten (W).
Clause 11: The method according to clause 10, wherein the ternary element comprises either vanadium (V) or chromium (Cr).
Clause 12: The method according to clause 10 or clause 11, wherein either the first endpoint material or the second endpoint material comprises a steel alloy.
Clause 13: The method according to any one of clauses 10-12, wherein the first endpoint material is the steel alloy, at least one layer in the first set of layers comprises a quaternary element.
Clause 14: The method according to any one of clauses 10-13, wherein at least one layer in the first set of layers comprises aluminum (Al); and wherein a maximum amount of aluminum (Al) in any layer of the first set of layers is no more than 15 wt%.
Clause 15: The method according to clause 14, wherein an amount of tungsten (W) changes linearly between adjacent layers in the second set of layers.
Clause 16: A plasma-facing component, comprising: a plasma-facing reactor portion comprising tungsten; a heat sinking portion surrounding at least a portion of the plasma-facing reactor portion; and a graded volume extending between the plasma-facing reactor portion and the heat sinking portion, wherein the graded volume comprises a plurality of additively manufactured layers; and wherein at least one of the plurality of additively manufactured layers comprises a ternary element selected from vanadium and chromium.
Clause 17: The plasma facing component according to claim 16, the graded volume having a ternary element gradient where a ternary element weight percent in an additively manufactured layer adjacent to the plasma-facing reactor portion is lower than the ternary element weight percent in an additively manufactured layer halfway between the plasma-facing reactor portion and the heat sinking portion; and a ternary element weight percent in an additively manufactured layer adjacent to the heat sinking portion is lower than the ternary element weight percent in the additively manufactured layer halfway between the plasma-facing reactor portion and the heat sinking portion.
Clause 18: The plasma facing component according to clause 16 or clause 17, wherein the graded volume includes less than 20 volume percent laves phase and mu phase; wherein at least one of the plurality of additively manufactured layers that comprises iron (Fe) further comprises aluminum; wherein aluminum is present in at least one of the plurality of additively manufactured layers at no more than 15 weight percent; and wherein the additively manufactured layers that include iron (Fe) include less than 20 volume percent sigma phase.
Clause 19: The plasma facing component according to any one of clauses 16-18, wherein the ternary element is present in at least one of the plurality of additively manufactured layers at no less than 80 weight percent; and wherein none of the plurality of additively manufactured layers include both steel and tungsten.
Clause 20: The plasma facing component according to any one of clauses 16-19, wherein the heat sinking portion includes oxide dispersion strengthened reduced activation ferritic martensitic (RAFM) steel.

For the recitation of numeric ranges herein, each intervening number there between with the same degree of precision is contemplated. For example, for the range of 6-9, the numbers 7 and 8 are contemplated in addition to 6 and 9, and for the range 6.0-7.0, the numbers 6.0, 6.1, 6.2, 6.3, 6.4, 6.5, 6.6, 6.7, 6.8, 6.9, and 7.0 are contemplated. For another example, when a pressure range is described as being between ambient pressure and another pressure, a pressure that is ambient pressure is expressly contemplated.

It is understood that the foregoing detailed description and accompanying examples are merely illustrative and are not to be taken as limitations upon the scope of the disclosure. Various changes and modifications to the disclosed embodiments will be apparent to those skilled in the art. Such changes and modifications, including without limitation those relating to the chemical structures, substituents, derivatives, intermediates, syntheses, compositions, formulations, or methods of use, may be made without departing from the spirit and scope of the disclosure.

## Claims

1. A functionally graded material, comprising:
a graded volume extending between a tungsten-based structure and a steel-based structure, the graded volume including a plurality of additively manufactured layers,
wherein at least one of the plurality of additively manufactured layers comprises a ternary element selected from vanadium and chromium.

2. The functionally graded material according to claim 1, the graded volume having a ternary element gradient where:
a ternary element weight percent in an additively manufactured layer adjacent to the tungsten portion is lower than the ternary element weight percent in an additively manufactured layer halfway between the tungsten portion and the steel portion; and
a ternary element weight percent in an additively manufactured layer adjacent to the steel portion is lower than the ternary element weight percent in the additively manufactured layer halfway between the tungsten portion and the steel portion.

3. The functionally graded material according to claim 1 or claim 2, wherein the graded volume includes less than 20 volume percent laves phase and mu phase.

4. The functionally graded material according to any one of claims 1-3, wherein at least one of the plurality of additively manufactured layers that comprises iron (Fe) further comprises aluminum.

5. The functionally graded material according to claim 4, wherein aluminum is present in at least one of the plurality of additively manufactured layers at no more than 15 weight percent; and
wherein the additively manufactured layers that include iron (Fe) include less than 20 volume percent sigma phase.

6. The functionally graded material according to any one of claims 1-5, wherein the ternary element is present in at least one of the plurality of additively manufactured layers at no less than 80 weight percent.

7. The functionally graded material according to any one of claims 1-6, wherein none of the plurality of additively manufactured layers include both steel and tungsten.

8. The functionally graded material according to any one of claims 1-7, wherein the steel portion includes oxide dispersion strengthened reduced activation ferritic martensitic (RAFM) steel.

9. A method for making a functionally graded material adjacent a first endpoint material and a second endpoint material, the method comprising:
successively generating a first set of layers, wherein each successive layer in the first set of layers comprises the first endpoint material in decreasing amounts and a ternary element in increasing amounts;
generating a layer comprising no less than 80 wt% of the ternary element and less than 10 wt% of the first endpoint material and/or the second endpoint material; and
successively generating a second set of layers, wherein each successive layer in the second set of layers comprises the second endpoint material in increasing amounts and the ternary element in decreasing amounts,
wherein either the first endpoint material or the second endpoint material comprises tungsten (W).

10. The method according to claim 9, wherein the ternary element comprises either vanadium (V) or chromium (Cr).

11. The method according to claim 10, wherein either the first endpoint material or the second endpoint material comprises a steel alloy.

12. The method according to claim 11, wherein the first endpoint material is the steel alloy, at least one layer in the first set of layers comprises aluminum (Al); and
wherein a maximum amount of aluminum (Al) in any layer of the first set of layers is no more than 15 wt%.

13. The method according to any one of claims 10-12, wherein an amount of tungsten (W) changes linearly between adjacent layers in the second set of layers.

14. A plasma facing component, comprising:
a plasma-facing reactor portion comprising tungsten;
a heat sinking portion surrounding at least a portion of the plasma-facing reactor portion; and
a graded volume extending between the plasma-facing reactor portion and the heat sinking portion,
wherein the graded volume comprises a plurality of additively manufactured layers; and
wherein at least one of the plurality of additively manufactured layers comprises a ternary element selected from vanadium and chromium.

15. The plasma facing component according to claim 15, the graded volume having a ternary element gradient where:
a ternary element weight percent in an additively manufactured layer adjacent to the plasma-facing reactor portion is lower than the ternary element weight percent in an additively manufactured layer halfway between the plasma-facing reactor portion and the heat sinking portion; and
a ternary element weight percent in an additively manufactured layer adjacent to the heat sinking portion is lower than the ternary element weight percent in the additively manufactured layer halfway between the plasma-facing reactor portion and the heat sinking portion.
